(19) Europäisches Patentamt / European Patent Office / Office européen des brevets

(11) **EP 4 264 029 B1**

(12) **FASCICULE DE BREVET EUROPEEN**

(45) Date de publication et mention de la délivrance du brevet:
**29.01.2025   Bulletin 2025/05**

(21) Numéro de dépôt: **21851614.4**

(22) Date de dépôt: **15.12.2021**

(51) Classification Internationale des Brevets (IPC):
**F02C 7/14** *(2006.01)*      **F28D 9/00** *(2006.01)*
**F28D 9/02** *(2006.01)*      **F28F 9/02** *(2006.01)*
**B33Y 80/00** *(2015.01)*

(52) Classification Coopérative des Brevets (CPC):
**F28F 9/0268; B33Y 80/00; F02C 7/14;**
**F28D 9/0062; F28D 9/02; F28F 9/0282;**
F05D 2250/14; F05D 2250/511; F05D 2250/52;
F05D 2250/71; F05D 2260/213; F28D 2021/0021;
F28D 2021/0026; F28F 2250/106; Y02T 50/60

(86) Numéro de dépôt international:
**PCT/FR2021/052336**

(87) Numéro de publication internationale:
**WO 2022/129785 (23.06.2022 Gazette 2022/25)**

(54) **ÉCHANGEUR DE CHALEUR À PLAQUES COMPORTANT DES ÉLÉMENTS PROFILÉS DE GUIDAGE**

PLATTENWÄRMEÜBERTRAGER MIT PROFILIERTEN LEITELEMENTEN

PLATE HEAT EXCHANGER COMPRISING PROFILED GUIDING ELEMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2020   FR 2013527**

(43) Date de publication de la demande:
**25.10.2023   Bulletin 2023/43**

(73) Titulaire: **SAFRAN**
**75015 Paris (FR)**

(72) Inventeur: **TOUBIANA, Ephraïm**
**77550 Moissy-Cramayel (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
DE-A1- 19 644 711      DE-A1- 19 943 389
FR-A- 918 616      FR-A1- 3 077 630
GB-A- 634 608      US-A1- 2019 285 349

**Description**

**Domaine technique de l'invention**

La présente invention concerne un échangeur de chaleur, en particulier pour une turbomachine.

**Arrière-plan technique**

L'arrière-plan technique comprend notamment les documents US-A1-2019/285349, FR-A1-3 077 630, DE-A1-199 43 389, FR-A1-918 616, DE-A1-196 44 711, GB-A-634 608.

De manière classique, une turbomachine, notamment d'aéronef, comporte, d'amont en aval dans le sens de l'écoulement des gaz, au moins un compresseur, une chambre de combustion, au moins une turbine, et une tuyère. Le compresseur est configuré pour accroître la pression de l'air, qui est ensuite fourni à la chambre de combustion. Dans la chambre de combustion, de l'air est mélangé à un carburant et brûlé. Les gaz de combustion passent ensuite à travers la turbine, qui assure l'entraînement en rotation du compresseur en prélevant une partie de l'énergie de pression des gaz sortant de la chambre de combustion et en la transformant en énergie mécanique. La tuyère permet d'éjecter des gaz d'échappement pour produire une force de propulsion de la turbomachine.

Un échangeur de chaleur est implanté dans une turbomachine pour permettre un transfert d'énergie thermique d'un fluide vers un autre.

Un échangeur de chaleur peut être, par exemple, utilisé pour un transfert d'énergie thermique des gaz chauds d'échappement vers un gaz destiné à être introduit en amont de la chambre de combustion, au bénéfice notamment de la consommation en carburant de la turbomachine. Un échangeur de chaleur peut également être utilisé pour refroidir le lubrifiant, par exemple de l'huile, des moyens de guidage des rotors du compresseur et la turbine, le compresseur et la turbine étant chacun constitués d'un premier ensemble de pièces fixes constituant un stator et d'un second ensemble de pièces, susceptible d'être mis en rotation par rapport au stator, constituant un rotor. A performance aérothermique équivalente, les échangeurs de chaleur à ailettes sont particulièrement employés dans les turbomachines en raison notamment de leur faible masse.

Un tel échangeur de chaleur, entre un premier fluide, par exemple des gaz chauds d'échappement, et un deuxième fluide, par exemple de l'air, comprend des étages de circulation du premier fluide et des voies de circulation du deuxième fluide ménagées entre deux étages consécutifs de circulation du premier fluide. Un étage de circulation du premier fluide comprend par exemple deux plaques parallèles distantes l'une de l'autre de manière à définir un passage de circulation du premier fluide et une série d'ailettes disposées par exemple sensiblement perpendiculairement entre les plaques.

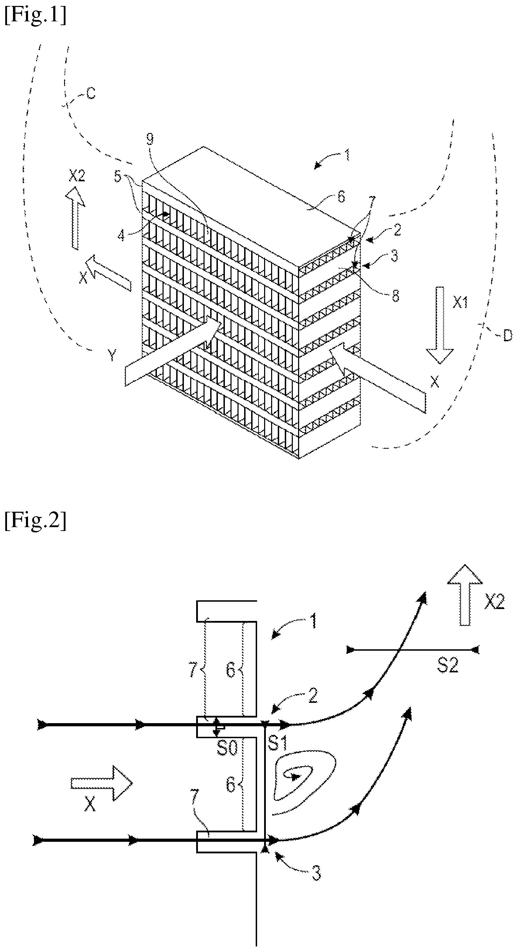

Les figures 1 et 2 représentent respectivement un exemple d'un tel échangeur 1 de chaleur, et des étages 2, 3 d'un tel échangeur de chaleur. Dans cet échangeur 1, un premier fluide s'écoule selon une direction longitudinale, notée X, et un deuxième fluide s'écoule sensiblement perpendiculairement au premier fluide, selon une direction notée Y. Il est à noter que dans d'autres exemples d'un tel échangeur de chaleur, il peut être prévu de faire circuler les premier et deuxième fluides dans le coeur de l'échangeur à contre-courant l'un de l'autre selon des directions parallèles. Dans ce cas, les directions des deux flux sont néanmoins prévues pour se croiser de façon sensiblement perpendiculaire à proximité des entrées et de sorties de l'échangeur, pour que les deux flux sortent sur des faces distinctes de l'échangeur.

Chaque étage 2, 3 comprend deux plaques 6 parallèles et distantes l'une de l'autre, s'étendant longitudinalement selon la direction X, de manière à définir un passage de circulation 7 du premier fluide.

Afin de cloisonner le premier fluide au sein de l'échangeur 1, chaque étage 2, 3 comprend également deux cloisons 5 extérieures, agencées sensiblement perpendiculairement aux plaques 6 et s'étendant longitudinalement selon la direction X, de manière à ce que les plaques 5, 6 définissent le passage de circulation 7. Chaque étage 2, 3 comprend également des séries d'ailettes 9 disposées sensiblement perpendiculairement entre les plaques 6, de manière à définir des séries de conduits dans les passages de circulation 7.

Une voie de circulation 4 du deuxième fluide est ménagée entre deux étages 2, 3 de circulation du premier fluide. Afin de cloisonner le deuxième fluide au sein de l'échangeur 1, l'échangeur 1 comprend des plaques 8, agencées sensiblement perpendiculairement aux plaques 5, 6 et s'étendant longitudinalement selon la direction Y, de manière à ce que les plaques 6, 8 définissent la voie de circulation 4. Une rangée d'ailettes 9 est disposée sensiblement perpendiculairement entre deux étages 2, 3 de circulation du premier fluide, de manière à définir une série de conduits dans le passage de circulation 4.

Cependant, l'échangeur 1 de chaleur présente une réduction abrupte des sections de passage du premier fluide en entrée de l'échangeur, et une augmentation abrupte des sections de passage du premier fluide en sortie de l'échangeur (cf. figure 2 en ce qui concerne la sortie des passages 7 et l'évolution des sections S0, S1, S2 de passage du premier fluide).

En effet, l'échangeur 1 est alimenté par le premier fluide grâce à un distributeur D qui guide le premier fluide depuis une direction X1 d'écoulement sensiblement perpendiculaire à la direction X, jusqu'à la direction X pour arriver en entrée des passages de circulation 7. Un collecteur C guide le premier fluide depuis la direction X jusqu'à une direction X2 d'écoulement sensiblement perpendiculaire à la direction X. De même, le deuxième fluide, circulant selon la direction Y, peut arriver sur les plaques 5 et être brusquement redirigé vers les voies de circulation 4.

Les passages de circulation 7 et les voies de circulation 4 présentent des sections plus faibles, du fait de la présence des plaques 5, 8 et des ailettes, que les sections de passage des fluides dans le distributeur D et le collecteur C.

En outre, cette réduction abrupte des sections de passage des fluides en entrée de l'échangeur et cette augmentation abrupte des sections de passage des fluides en sortie de l'échangeur sont d'autant plus importantes que la variation des sections de passage des fluides est importante. Plus précisément, lorsqu'il existe un écart important entre les hauteurs des sections de passage du premier et du deuxième fluide, c'est-à-dire entre les hauteurs des ailettes 9 et des plaques 5, 8, une réduction abrupte des sections de passage des fluides en entrée de l'échangeur et une augmentation abrupte des sections de passage des fluides en sortie de l'échangeur peuvent être rencontrées.

Une telle architecture présente notamment l'inconvénient d'entrainer une importante perte d'énergie, également appelée perte de charge. En particulier, cette perte de charge peut correspondre à plus de 20% de la perte totale de charge autorisée.

La réduction de cette perte de charge est d'autant plus importante que les zones où elles ont lieu contribuent relativement peu à l'échange thermique. De plus, une importante perte de charge peut entraîner des problèmes de distribution inhomogène de l'écoulement, ce qui peut réduire les performances de l'échangeur. La déflection de l'écoulement en entrée et en sortie n'est pas contrôlée ou guidée, ce qui entraine une distribution de la vitesse de façon inhomogène au sein d'une section donnée du distributeur D et du collecteur C.

En raison des fortes contraintes en termes de masse à iso-performances aérothermiques, l'objectif de la présente invention est ainsi de proposer, un échangeur de chaleur, à performances thermiques et masse équivalentes, présentant une réduction de sa perte de charge.

La Demanderesse a déjà proposé dans la demande FR-A1-3 077 630 un échangeur de chaleur équipé d'éléments profilés en entrée et en sortie des passages de circulation du premier fluide. La Demanderesse propose un perfectionnement à la technologie décrite dans ce document.

## Résumé de l'invention

A cet effet, l'invention concerne un échangeur de chaleur à plaques, en particulier pour une turbomachine d'aéronef, entre un premier fluide et un deuxième fluide, le premier fluide étant destiné à circuler selon une première direction, et le deuxième fluide étant destiné à circuler selon une deuxième direction différente de la première direction, ledit échangeur comprenant des étages empilés de circulation du premier fluide, chaque étage comprenant :

- deux plaques parallèles et distantes l'une de l'autre, de manière à définir entre elles un passage de circulation du premier fluide,
- une série d'ailettes disposées sensiblement perpendiculairement au niveau de chacune des plaques, de manière à définir une série de conduits de circulation du premier fluide dans ledit passage de circulation,
- des premiers éléments profilés d'entrée du premier fluide dans ledit passage de circulation, ces premiers éléments profilés étant situés au niveau de chacune des plaques, en entrée dudit passage, de façon à définir un premier chemin convergent de guidage dudit premier fluide dans ce passage, et/ou
- des seconds éléments profilés de sortie du premier fluide dudit passage de circulation, ces seconds éléments profilés étant situés au niveau de chacune des plaques, en sortie dudit passage, de façon à définir un second chemin divergent de guidage dudit premier fluide à l'extérieur de ce passage, caractérisé en ce que chacun desdits premiers et seconds profilés a en section transversale une forme en dent de scie qui comprend :
- un premier bord périphérique comportant une première extrémité sensiblement rectiligne de liaison à l'une des plaques définissant un premier desdits passages de circulation, une deuxième extrémité située à une pointe de l'élément profilé, et une partie incurvée convexe s'étendant entre les première et deuxième extrémités,
- un second bord périphérique comportant une troisième extrémité sensiblement rectiligne de liaison à l'une des plaques définissant un second desdits passages de circulation, adjacent audit premier passage, une quatrième extrémité située à la pointe de l'élément profilé et orientée sensiblement perpendiculairement à la troisième extrémité en formant avec la deuxième extrémité un angle inférieur à 90°, et une partie incurvée concave s'étendant entre les troisième et quatrième extrémités,

les parties incurvées concave et convexe desdits premiers et seconds profilés ayant des courbures différentes de façon à définir lesdits premier et second chemins.

L'invention a pour objectif de réduire significativement les pertes de charge en entrée et en sortie des passages de circulation du premier fluide. Ceci est rendu possible grâce aux éléments qui sont profilés de façon à avoir d'une part une accélération progressive de l'écoulement en entrée des passages, et une décélération progressive de l'écoulement en sortie. Les éléments sont en outre profilés pour introduire un déflection progressive de l'écoulement tout en faisant varier progressivement la section de passage du fluide de façon à éviter des zones de recirculation dans cet écoulement. L'invention permet notamment une réduction significative des pertes de charge à iso-encombrement, une amélioration de la distribution de l'écoulement (homogénéisation), et une réduction de volume du distributeur et du collecteur de l'échangeur à iso-pertes de charge (car la déflection à 90° est beaucoup plus courte avec le guidage du flux), ce qui permet une meilleure tenue à la pression et réduit la masse du distributeur et du collecteur. Le distributeur et le collecteur peuvent être intégrés à l'échangeur ou être des pièces indépendantes rapportées sur l'échangeur.

L'échangeur de chaleur selon l'invention comprend une ou plusieurs des caractéristiques suivantes, prises isolément les unes des autres ou en combinaison les unes avec les autres :

- la deuxième extrémité située à la pointe de l'élément profilé est orientée sensiblement perpendiculairement à la première extrémité ;
- la deuxième extrémité située à la pointe de l'élément profilé forme avec la première extrémité un angle compris entre 60° et 95°, et préférablement entre 70° et 90° ;
- les pointes des premiers et seconds éléments profilés sont effilés ;
- lesdits premiers éléments profilés sont portés par un collecteur rapporté en entrée des plaques, et lesdits seconds éléments profilés sont portés par un distributeur rapporté en sortie des plaques ;
- lesdits premiers et seconds éléments profilés sont intégrés auxdites plaques ;
- la partie incurvée convexe a une courbure correspondant à un quart d'une ellipse ayant un plus grand rayon a1 au niveau de la deuxième extrémité et un plus petit rayon b1 au niveau de la première extrémité, et la partie incurvée concave a une courbure correspondant à une partie, et par exemple un quart, d'une ellipse ayant un plus grand rayon a2 au niveau de la quatrième extrémité et un plus petit rayon b2 au niveau de la troisième extrémité, les ellipses ayant un même centre et a2 et b2 étant respectivement plus grands que a1 et b1 ;
- lesdits premiers éléments profilés sont tous identiques et lesdits seconds éléments profilés sont tous identiques ;
-

[MATH1]

$$a_2 = a_1 + h \cdot R_d$$

dans lequel *h* est la distance entre les plaques et *Rd* est un paramètre de contrôle de la variation de section du chemin correspondant.

-

[MATH2]

$$b_2 = \frac{pas}{\sqrt{1 - (\frac{a_1}{a_2})^2}}$$

[MATH3]

$$b_1 = b_2 - h$$

dans lesquels *pas* est le pas entre deux passages de circulation adjacents ;

-

[MATH4]

$$a_{1,n+1} = a_{1,n} + R_a$$

ou

[MATH5]

$$a_{1,n+1} = a_{1,n} \cdot R_g$$

avec Ra et R*g* des raisons de ces suites, arithmétique pour la première et géométrique pour la seconde ;

- les ailettes sont disposées sensiblement perpendiculairement entre lesdites plaques.

L'invention concerne également une turbomachine comprenant au moins un échangeur de chaleur tel que décrit ci-dessus.

L'invention se rapporte également à un procédé de réalisation d'un échangeur de chaleur selon l'invention, le procédé comprenant une étape de réalisation dudit échangeur de chaleur par fabrication additive par fusion sélective sur lits de poudre.

Avantageusement, le procédé de réalisation d'un échangeur de chaleur selon l'invention par fabrication additive par fusion sélective sur lits de poudre est simplifié par rapport aux procédés de fabrication des échangeurs de chaleur par brasage. En particulier, la réalisation d'un échangeur selon l'invention présente moins de difficultés à être réalisé par fabrication additive par fusion sélective sur lits de poudre, que par brasage.

En outre, grâce au procédé de réalisation d'un échangeur selon l'invention, il n'est pas forcément nécessaire d'avoir un support particulier lors de la réalisation dudit échangeur de chaleur.

## Brève description des figures

D'autres caractéristiques et avantages de l'invention apparaitront au cours de la lecture de la description détaillée qui va suivre pour la compréhension de laquelle on se reportera aux dessins annexés dans lesquels :

[Fig. 1] la figure 1 est une vue schématique en perspective d'un échangeur de chaleur à plaques pour une turbomachine d'aéronef,

[Fig. 2] la figure 2 est une vue très schématique de l'écoulement d'un premier fluide en sortie d'un échangeur de chaleur selon la technique antérieure,

[Fig. 3] la figure 3 est une vue très schématique d'un collecteur ou distributeur pour un échangeur de chaleur à plaques selon l'invention,

[Fig. 4] la figure 4 est une vue à plus grande échelle d'une partie de la figure 3 et montre des éléments profilés d'un échangeur de chaleur,

[Fig. 5a-5b] les figures 5a et 5b sont des schémas montrant des exemples de courbure pour les éléments profilés de l'échangeur de chaleur,

[Fig. 6] la figure 6 est une vue similaire à celle de la figure 4 et illustre l'écoulement du premier fluide en sortie de l'échangeur, et

[Fig. 7] la figure 7 est une vue similaire à celle de la figure 4 et illustre l'écoulement du premier fluide en entrée de l'échangeur.

## Description détaillée de l'invention

L'invention concerne un échangeur de chaleur 1 dont un exemple est illustré à la figure 1 et décrit dans ce qui précède. La description qui précède s'applique donc à un échangeur de chaleur selon l'invention.

En plus des caractéristiques précitées, l'échangeur 1 selon l'invention comprend des éléments profilés 10 en entrée et en sortie des passages 7 et qui sont conçus pour optimiser la défection de l'écoulement du premier fluide tout en évitant l'apparition de zones de recirculation et la génération de pertes de charge.

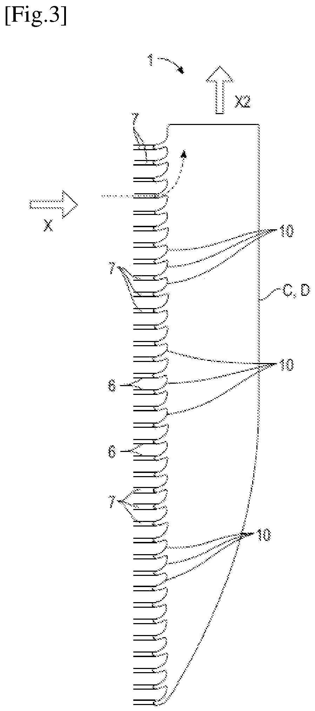

La figure 3 illustre une partie seulement d'un échangeur de chaleur 1 selon l'invention et plus particulièrement un côté de cet échangeur, qui correspond ici à un collecteur C de sortie du premier fluide des passages 7 précités. La description qui suit s'applique aussi au distributeur D qui est monté en entrée des passages pour l'alimentation de ces passages 7 avec le premier fluide.

Comme évoqué dans ce qui précède, le premier fluide est collecté par les passages 7 dans le collecteur C dans la direction X et est dévié dans la direction X2. Dans le distributeur D, le premier fluide s'écoule dans la direction X1 et est redirigé dans la direction X.

Les éléments profilés 10 peuvent être portés par le collecteur D ou le distributeur D et par exemple intégrés ou formés d'une seule pièce avec le collecteur ou distributeur. En variante, les éléments profilés 10 peuvent être directement prévus aux extrémités des plaques 6 délimitant entre elles les passages 7, et sont alors indépendants du collecteur C et du distributeur D.

Les éléments profilés 10 sont situés au niveau des plaques 6 et ont pour fonction de définir des chemins convergents de guidage du premier fluide en entrée des passages 7, d'une part, et des chemins divergents de guidage du premier fluide en sortie des passages 7, d'autre part.

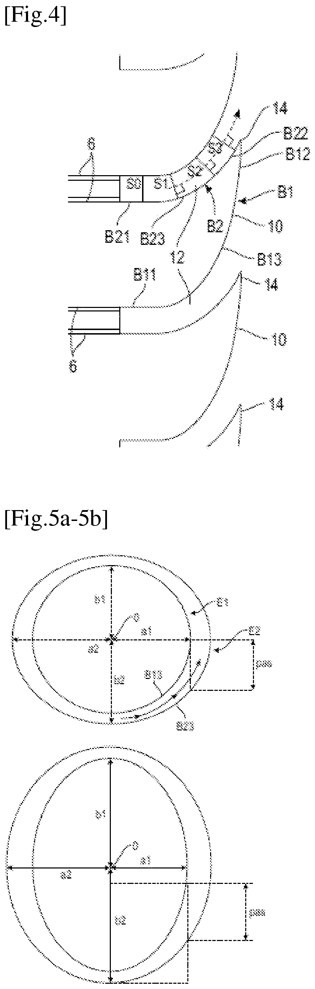

Chacun des éléments profilés 10 est situé sur un côté commun de deux plaques 6 adjacentes et s'étend le long de ce côté. L'une de ces plaques 6 définit un premier passage 7 et l'autre de ces plaques définit un passage 7 adjacent. Chacun des éléments profilés 10 a donc une forme générale allongée. Chacun des éléments profilés 10 présente en section transversale une forme générale en dent de scie, comme cela est mieux visible à la figure 4.

La forme en dent de scie comprend :

- un premier bord périphérique B1 comportant une première extrémité B11 sensiblement rectiligne de liaison à une première des plaques 6 (définissant un premier passage de circulation 7), une deuxième extrémité B12 située à une pointe 14 de l'élément profilé 10 et orientée sensiblement perpendiculairement à la première extrémité B11, et une partie incurvée convexe B13 s'étendant entre les première et deuxième extrémités B11, B12,
- un second bord périphérique B2 comportant une troisième extrémité B21 sensiblement rectiligne de liaison à une seconde des plaques 6 (définissant un second passage de circulation 7 adjacent au premier passage), une quatrième extrémité B22 située à la pointe 14 de l'élément profilé 10 et orientée sensiblement perpendiculairement à la troisième extrémité B21, et une partie incurvée concave B23 s'étendant entre les troisième et quatrième extrémités B21, B22.

Les parties incurvées concave B13 et convexe B23 des profilés 10 ont des courbures différentes de façon à définir les chemins 12 convergents et divergents précités.

Comme on le voit à la figure 4, les pointes 14 des éléments profilés 10 sont toutes orientées dans le même sens et sont ici effilés, c'est-à-dire les plus fines possibles. Leur épaisseur est par exemple inférieure ou égale à 0,5 mm.

Le schéma de la figure 5a illustre les différences de courbure des deux parties B13 et B23 de la forme en dent de scie de chaque élément profilé 10.

La partie incurvée convexe B13 a une courbure correspondant à un quart, voire moins, d'une ellipse E1 ayant un plus grand rayon a1 au niveau de la deuxième extrémité B12 et un plus petit rayon b1 au niveau de la première extrémité B11.

La partie incurvée concave B23 a une courbure correspondant à un quart d'une ellipse E2 ayant un plus grand rayon a2 au niveau de la quatrième extrémité B23 et un plus petit rayon b2 au niveau de la troisième extrémité B21.

Comme on le voit à la figure 5a, les ellipses E1 et E2 ont le même centre O et l'ellipse E2 est plus grande que l'ellipse E1, c'est-à-dire que a2 et b2 sont respectivement plus grands que a1 et b1.

Dans l'exemple représenté aux figures 3 à 7 qui représente un premier mode de réalisation de l'invention, les éléments profilés 10 sont tous identiques.

Les équations suivantes permettent de calculer les valeurs de a1, a2, b1 et b2 et sont communiquées à titre d'exemple.

[MATH1]

$$a_2 = a_1 + h \cdot R_d$$

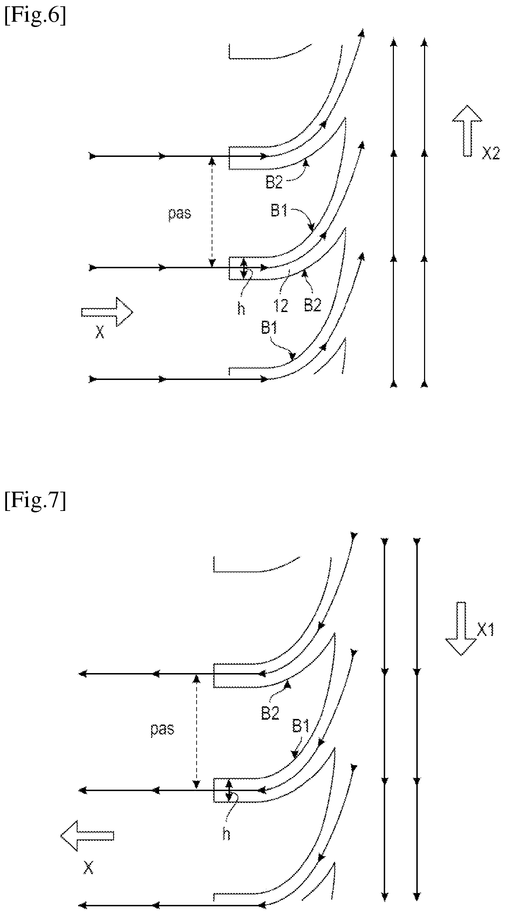

dans lequel $h$ est la distance entre les plaques 6 et donc la hauteur des passages 7, comme illustré à la figure 6, et $R_d$ est un paramètre de contrôle de la variation de section du chemin 12 correspondant.

[MATH2]

$$b_2 = \frac{pas}{\sqrt{1 - (\frac{a_1}{a_2})^2}}$$

[MATH3]

$$b_1 = b_2 - h$$

dans lesquels $pas$ est le pas entre deux passages 7 adjacents, comme illustré à la figure 6.

En variante, les éléments profilés 10 sont différents et dimensionnés selon une suite arithmétique ou géométrique prédéterminée.

[MATH4]

$$a_{1,n+1} = a_{1,n} + R_a$$

ou

[MATH5]

$$a_{1,n+1} = a_{1,n} \cdot R_g$$

avec Ra et R*g* des raisons de ces suites.

[MATH3]

$$b_1 = b_2 - h$$

Les éléments profilés 10 de l'échangeur selon l'invention peuvent être réalisés par fabrication additive par fusion sélective sur lits de poudre par exemple. Comme évoqué dans ce qui précède, ces éléments profilés 10 peuvent être réalisés avec les plaques 6 lorsqu'ils sont intégrés aux plaques 6, ou réalisés avec le collecteur C ou le distributeur D lorsqu'ils sont intégrés à ces derniers.

La figure 5b illustre une variante de réalisation des ellipses E1 et E2. Elles ont le même centre O et l'ellipse E2 est plus grande que l'ellipse E1. b2 est supérieur à b1 mais est ici supérieur à a1. a2 est supérieur à a1.

Par ailleurs, la partie encadrée de la figure 5b montre que la zone d'intérêt choisie pour les courbures des éléments profilés n'est pas nécessairement un quart de la grande ellipse mais peut représenter moins d'un quart d'ellipse.

**Revendications**

1. Echangeur (1) de chaleur à plaques, en particulier pour une turbomachine d'aéronef, entre un premier fluide et un deuxième fluide, le premier fluide étant destiné à circuler selon une première direction (X), et le deuxième fluide étant destiné à circuler selon une deuxième direction (Y) différente de la première direction, ledit échangeur comprenant des étages (2, 3) empilés de circulation du premier fluide, chaque étage comprenant :

   - deux plaques (6) parallèles et distantes l'une de l'autre, de manière à définir entre elles un passage (7) de circulation du premier fluide,
   - une série d'ailettes (9) disposées entre lesdites plaques (6), de manière à définir une série de conduits de circulation du premier fluide dans ledit passage de circulation (7),
   - des premiers éléments profilés (10) d'entrée du premier fluide dans ledit passage de circulation (7), ces premiers éléments profilés (10) étant situés au niveau de chacune des plaques, en entrée dudit passage, de façon à définir un premier chemin (12) convergent de guidage dudit premier fluide dans ce passage, et/ou
   - des seconds éléments profilés (10) de sortie du premier fluide dudit passage de circulation, ces seconds éléments profilés (10) étant situés au niveau de chacune des plaques (6), en sortie dudit passage, de façon à définir un second chemin (12) divergent de guidage dudit premier fluide à l'extérieur de ce passage,
   chacun desdits premiers et seconds profilés (10) ayant en section transversale une forme en dent de scie qui comprend :

      - un premier bord périphérique (B1) comportant une première extrémité (B11) sensiblement rectiligne de liaison à l'une des plaques (6) définissant un premier desdits passages de circulation (7), une deuxième extrémité (B12) située à une pointe (14) de l'élément profilé (10), et une partie incurvée convexe (B13) s'étendant entre les première et deuxième extrémités (B11, B12),
      - un second bord périphérique (B2) comportant une troisième extrémité (B21) sensiblement rectiligne de liaison à l'une des plaques (6) définissant un second desdits passages de circulation (7), adjacent audit premier passage, une quatrième extrémité (B22) située à la pointe de l'élément profilé et orientée en formant avec la deuxième extrémité (B12) un angle inférieur à 90°, et une partie incurvée concave (B23) s'étendant entre les troisième et quatrième extrémités (B21, B2),

      les parties incurvées concave et convexe (B13, B23) desdits premiers et seconds profilés (10) ayant des

7

courbures différentes de façon à définir lesdits premier et second chemins,
**caractérisé en ce que** la partie incurvée convexe (B13) a une courbure correspondant à un quart d'une ellipse (E1) ayant un plus grand rayon a1 au niveau de la deuxième extrémité et un plus petit rayon b1 au niveau de la première extrémité, et la partie incurvée concave (B23) a une courbure correspondant à une partie d'une ellipse (E2) ayant un plus grand rayon a2 au niveau de la quatrième extrémité et un plus petit rayon b2 au niveau de la troisième extrémité, les ellipses (E1, E2) ayant un même centre et a2 et b2 étant respectivement plus grands que a1 et b1.

2. Echangeur (1) de chaleur selon la revendication précédente, dans lequel la deuxième extrémité (B12) située à la pointe (14) de l'élément profilé (10) forme avec la première extrémité (B11) un angle compris entre 60° et 95°, et préférablement entre 70° et 90°.

3. Echangeur (1) de chaleur selon la revendication précédente, dans lequel les pointes (14) des premiers et seconds éléments profilés (10) sont effilées.

4. Echangeur (1) de chaleur selon l'une des revendications précédentes, dans lequel lesdits premiers éléments profilés (10) sont portés par un collecteur (C) rapporté en entrée des plaques (6), et lesdits seconds éléments profilés sont portés par un distributeur (D) rapporté en sortie des plaques.

5. Echangeur (1) de chaleur selon l'une des revendications 1 à 4, dans lequel lesdits premiers et seconds éléments profilés (10) sont intégrés auxdites plaques (6).

6. Echangeur (1) de chaleur selon l'une des revendications précédentes, dans lequel lesdits premiers éléments profilés (10) sont tous identiques et lesdits seconds éléments profilés (10) sont tous identiques.

7. Echangeur (1) de chaleur selon l'une des revendications précédentes, dans lequel

[MATH1]

$$a_2 = a_1 + h \cdot R_d$$

dans lequel h est la distance entre les plaques (6) et *Rd* est un paramètre de contrôle de la variation de section du chemin (12) correspondant.

8. Echangeur (1) de chaleur selon la revendication précédente, dans lequel

[MATH2]

$$b_2 = \frac{pas}{\sqrt{1 - (\frac{a_1}{a_2})^2}}$$

[MATH3]

$$b_1 = b_2 - h$$

dans lesquels *pas* est le pas entre deux passages de circulation (7) adjacents.

9. Echangeur (1) de chaleur selon l'une des revendications 1 à 5, dans lequel

[MATH4]

$$a_{1,n+1} = a_{1,n} + R_a$$

ou

[MATH5]

$$a_{1,n+1} = a_{1,n} \cdot R_g$$

avec Ra et R$g$ des raisons de ces suites, respectivement arithmétique et géométrique.

10. Echangeur (1) de chaleur selon l'une des revendications précédentes, dans lequel la deuxième extrémité (B12) située à la pointe (14) de l'élément profilé (10) est orientée sensiblement perpendiculairement à la première extrémité (B11).

11. Echangeur (1) de chaleur selon l'une des revendications précédentes, dans lequel les ailettes (9) sont disposées sensiblement perpendiculairement entre lesdites plaques (6).

12. Turbomachine comprenant au moins un échangeur (10) de chaleur selon l'une des revendications précédentes.

**Patentansprüche**

1. Plattenwärmetauscher (1), insbesondere für ein Turbotriebwerk eines Luftfahrzeugs, zwischen einem ersten Fluid und einem zweiten Fluid, wobei das erste Fluid dazu bestimmt ist, gemäß einer ersten Richtung (X) zu zirkulieren, und das zweite Fluid dazu bestimmt ist, gemäß einer zweiten Richtung (Y), die sich von der ersten Richtung unterscheidet, zu zirkulieren, wobei der Tauscher gestapelte Zirkulationsstufen (2, 3) des ersten Fluids umfasst, wobei jede Stufe umfasst:

   - zwei parallele und voneinander beabstandete Platten (6), um zwischen ihnen einen Zirkulationsdurchgang (7) des ersten Fluids zu definieren,
   - eine Reihe von zwischen den Platten (6) angeordneten Rippen (9), um eine Reihe von Zirkulationsleitungen des ersten Fluids in dem Zirkulationsdurchgang (7) zu definieren,
   - erste profilierte Elemente (10) zum Eintritt des ersten Fluids in den Zirkulationsdurchgang (7), wobei sich diese profilierten Elemente (10) am Eintritt des Durchgangs derart auf Höhe von jeder der Platten befinden, um so einen ersten konvergierenden Führungsweg (12) des ersten Fluids in diesem Durchgang zu definieren, und/oder
   - zweite profilierte Elemente (10) zum Austritt des ersten Fluids des Zirkulationsdurchgangs, wobei sich diese zweiten profilierten Elemente (10) am Austritt des Durchgangs auf Höhe von jeder der Platten (6) befinden, um so einen zweiten divergierenden Führungsweg (12) des ersten Fluids außerhalb des Durchgangs zu definieren, wobei jedes der ersten und zweiten Profile (10) im Querschnitt eine Sägezahnform aufweist, die umfasst:

      - einen ersten Umfangsrand (B1), beinhaltend ein erstes Ende (B11), das im Wesentlichen geradlinig ist, zur Verbindung mit einer der Platten (6), die einen ersten der Zirkulationsdurchgänge (7) definieren, ein zweites Ende (B12), das sich an einer Spitze (14) des profilierten Elements (10) befindet, und ein konvex gekrümmtes Teil (B13), das sich zwischen dem ersten und dem zweiten Ende (B11, B12) befindet,
      - einen zweiten Umfangsrand (B2), beinhaltend ein drittes Ende (B21), das im Wesentlichen geradlining ist, zur Verbindung mit einer der Platten (6), die einen zweiten der Zirkulationsdurchgänge (7) benachbart zu dem ersten Durchgang definieren, ein viertes Ende (B22), das sich an der Spitze des profilierten Elements befindet und durch Bilden eines Winkels kleiner als 90° mit dem zweiten Ende (B12) orientiert ist, und ein konkav gekrümmtes Teil (B23), das sich zwischen dem dritten und vierten Ende (B21, B2) erstreckt,

   wobei das konkav und konvex gekrümmte Teil (B13, B23) des ersten und zweiten Profils (10) unterschiedliche Krümmungen aufweisen, um so den ersten und zweiten Weg zu definieren, **dadurch gekennzeichnet, dass** das konvex gekrümmte Teil (B13) eine Krümmung entsprechend einem Viertel einer Ellipse (E1) aufweist, die einen größeren Radius a1 auf Höhe des zweiten Endes und einen kleineren Radius b1 auf Höhe des ersten Endes aufweist, und das konkav gekrümmte Teil (B23) eine Krümmung entsprechend einem Teil einer Ellipse (E2) aufweist, die einen größeren Radius a2 auf Höhe des vierten Endes und einen kleineren Radius b2 auf Höhe des dritten Endes aufweist, wobei die Ellipsen (E1, E2) einen gleichen Mittelpunkt aufweisen und a2 und b2 jeweils größer sind als a1 und b1.

2. Wärmetauscher (1) nach dem vorstehenden Anspruch, wobei das zweite Ende (B12), das sich an der Spitze (14) des profilierten Elements (10) befindet, mit dem ersten Ende (B11) einen Winkel zwischen 60° und 95° und vorzugsweise zwischen 70° und 90° bildet.

**3.** Wärmetauscher (1) nach dem vorstehenden Anspruch, wobei die Spitzen (14) der ersten und zweiten profilierten Elemente (10) abgeschrägt sind.

**4.** Wärmetauscher (1) nach dem vorstehenden Anspruch, wobei die ersten profilierten Elemente (10) von einem Kollektor (C) getragen werden, der am Eintritt der Platten (6) angebracht ist, und die zweiten profilierten Elemente von einem Verteiler (D) getragen werden, der am Austritt der Platten angebracht ist.

**5.** Wärmetauscher (1) nach einem der Ansprüche 1 bis 4, wobei die ersten und zweiten profilierten Elemente (10) mit den Platten (6) integriert sind.

**6.** Wärmetauscher (1) nach einem der vorstehenden Ansprüche, wobei die ersten profilierten Elemente (10) alle identisch sind und die zweiten profilierten Elemente (10) alle identisch sind.

**7.** Wärmetauscher (1) nach einem der vorstehenden Ansprüche, wobei

[MATH1]

$$a_2 = a_1 + h \cdot R_d$$

wobei h der Abstand zwischen den Platten (6) ist und *Rd* ein Kontrollparameter der Variation des entsprechenden Abschnitts des Wegs (12) ist.

**8.** Wärmetauscher (1) nach dem vorstehenden Anspruch, wobei

[MATH2]

$$b_2 = \frac{Schritt}{\sqrt{1 - \left(\frac{a_1}{a_2}\right)^2}}$$

[MATH3]

$$b_1 = b_2 - h$$

wobei *Schritt* der Schritt zwischen zwei benachbarten Zirkulationsdurchgängen (7) ist.

**9.** Wärmetauscher (1) nach einem der Ansprüche 1 bis 5, wobei

[MATH4]

$$a_{1,n+1} = a_{1,n} + R_a$$

oder

[MATH5]

$$a_{1,n+1} = a_{1,n} \cdot R_g$$

wobei Ra und R*g* die Quotienten dieser Folgen, jeweils arithmetisch und geometrisch, sind.

**10.** Wärmetauscher (1) nach einem der vorstehenden Ansprüche, wobei das zweite Ende (B12), das sich an der Spitze (14) des profilierten Elements (10) befindet, im Wesentlichen senkrecht zu dem ersten Ende (B11) orientiert ist.

**11.** Wärmetauscher (1) nach einem der vorstehenden Ansprüche, wobei die Rippen (9) zwischen den Platten (6) im Wesentlichen senkrecht angeordnet sind.

12. Turbotriebwerk, umfassend mindestens einen Wärmetauscher (10) nach einem der vorstehenden Ansprüche.

**Claims**

1. A plate heat exchanger (1), in particular for an aircraft turbomachine, between a first fluid and a second fluid, the first fluid being intended to circulate along a first direction (X), and the second fluid being intended to circulate along a second direction (Y) different from the first direction, said exchanger comprising stacked stages (2, 3) for circulation of the first fluid, each stage comprising:

   - two parallel plates (6) at a distance from each other, so as to define between them a passage (7) for the circulation of the first fluid,
   - a series of fins (9) arranged between said plates (6), so as to define a series of conduits for the circulation of the first fluid in said circulation passage (7),
   - first profiled elements (10) for the entry of the first fluid into said circulation passage (7), these first profiled elements (10) being located at the level of each of the plates, at the entry to said passage, so as to define a first convergent path (12) for guiding said first fluid in this passage, and/or
   - second profiled elements (10) for the outlet of the first fluid from said circulation passage, these second profiled elements (10) being located at the level of each of the plates (6), at the outlet of said passage, so as to define a second divergent path (12) for guiding said first fluid outside this passage,
   each of said first and second profiles (10) has in cross-section a sawtooth shape which comprises:

      - a first peripheral edge (B1) comprising a substantially straight first end (B11) for connection to one of the plates (6) defining a first of said circulation passages (7), a second end (B12) located at a tip (14) of the profiled element (10), and a convex curved portion (B13) extending between the first and second ends (B11, B12),
      - a second peripheral edge (B2) comprising a substantially straight third end (B21) for connection to one of the plates (6) defining a second of said circulation passages (7) adjacent to said first passage, a fourth end (B22) located at the tip of the profiled element and oriented at an angle of less than 90° to the second end (B12), and a concave curved portion (B23) extending between the third and fourth ends (B21, B2),

   the concave and convex curved portions (B13, B23) of said first and second profiles (10) having different curvatures so as to define said first and second paths,
   **characterised in that** the convex curved portion (B13) has a curvature corresponding to a quarter of an ellipse (E1) having a larger radius a1 at the level of the second end and a smaller radius b1 at the level of the first end, and the concave curved portion (B23) has a curvature corresponding to a portion of an ellipse (E2) having a larger radius a2 at the level of the fourth end and a smaller radius b2 at the level of the third end, the ellipses (E1, E2) having a same centre and a2 and b2 being respectively larger than a1 and b1.

2. The heat exchanger (1) according to the preceding claim, wherein the second end (B12) located at the tip (14) of the profiled element (10) forms an angle of between 60° and 95°, and preferably between 70° and 90°, with the first end (B11).

3. The heat exchanger (1) according to the preceding claim, wherein the tips (14) of the first and second profiled elements (10) are tapered.

4. The heat exchanger (1) according to one of the preceding claims, wherein said first profiled elements (10) are carried by a manifold (C) fitted to the inlet of the plates (6), and said second profiled elements are carried by a distributor (D) fitted to the outlet of the plates.

5. The heat exchanger (1) according to one of claims 1 to 4, wherein said first and second profiled elements (10) are integrated with said plates (6).

6. The heat exchanger (1) according to one of the preceding claims, wherein said first profiled elements (10) are all identical and said second profiled elements (10) are all identical.

7. The heat exchanger (1) according to one of the preceding claims, wherein

[MATH1]

$$a_2 = a_1 + h \cdot R_d$$

where h is the distance between the plates (6) and $Rd$ is a parameter controlling the variation in cross-section of the corresponding path (12).

8. The heat exchanger (1) according to the preceding claim, wherein

[MATH2]

$$b_2 = \frac{pitch}{\sqrt{1 - (\frac{a_1}{a_2})^2}}$$

[MATH3]

$$b_1 = b_2 - h$$

where *pitch* is the pitch between two adjacent circulation passages (7).

9. The heat exchanger (1) according to one of claims 1 to 5, wherein

[MATH4]

$$a_{1,n+1} = a_{1,n} + R_a$$

or

[MATH5]

$$a_{1,n+1} = a_{1,n} \cdot R_g$$

where Ra and R$g$ are the reasons for these sequences, arithmetic and geometric respectively.

10. The heat exchanger (1) according to one of the preceding claims, wherein the second end (B12) located at the tip (14) of the profiled element (10) is oriented substantially perpendicular to the first end (B11).

11. The heat exchanger (1) according to one of the preceding claims, wherein the fins (9) are arranged substantially perpendicularly between said plates (6).

12. A turbomachine comprising at least one heat exchanger (10) according to one of the preceding claims.

[Fig.1]

[Fig.2]

[Fig.3]

[Fig.4]

[Fig.5a-5b]

[Fig.6]

[Fig.7]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2019285349 A1
- FR 3077630 A1
- DE 19943389 A1
- FR 918616 A1
- DE 19644711 A1
- GB 634608 A